# DEMANDE DE BREVET EUROPEEN

(11) **EP 0 633 183 A1**
(43) Date de publication de la demande: **11.01.1995**
(21) Numéro de dépôt: 94500109.7
(22) Date de dépôt: 20.06.1994
(51) Int. Cl.: B62D 27/06

(54) **Dispositif de fixation pour piquet sur ridelles de camions**

(30) Priorité: 05.07.1993 ES 9301861 U
(71) Demandeur: ADAICO, S.L., E-31006 Pamplona (Navarra) (ES)
(72) Inventeur: Zugaza, Juan Manuel, ADAICO, S.L., E-31006 Pamplona (ES)
(74) Mandataire: Urizar Barandiaran, Miguel Angel

(57) **Abrégé**

Dispositif de fixation pour piquets sur ridelles de camions, constitué d'une pièce-support (1), fixée à la plateforme du camion, d'une pièce de blocage (2) glissant sur le piquet (3) sous l'action d'un levier (4) ayant une anse de prise-contrôle manuelle et contre l'action d'un ressort (m) relié par ses extrémités à la pièce de blocage (2) et au piquet (3), cette pièce-support (1) présentant axialement une mortaise, aux parois latérales convergentes à partir de leurs bords latéraux, les deux chanfreins convergeant de concert avec ceux de la pièce-support, dans laquelle elle s'encastre progressivement.

## Description

La présente invention concerne un dispositif de fixation pour piquets de ridelles de camions permettant de démonter le piquet, de manière sûre et rapide, de la structure de la plateforme, de sorte de pouvoir changer la position du piquet -ou même de le démonter et le mettre de côté- en fonction des besoins propres du moment.

Dans l'ancienne technologie, les plateformes de charge des véhicules constituaient une unité inséparable des piquets sur lesquels se trouvent montées les ridelles.

On vit apparaître ensuite une technologie plus avancée, laquelle permettait le montage ou démontage des piquets sur les plateformes de charge, bien que toujours à des endroits fixes de ces mêmes plateformes (lesquelles présentent, à tel effet, les formages et/ou dispositifs d'ancrage idoines).

Or il a été vérifié de façon expérimentale que les dispositifs d'attache actuels s'avèrent fort peu maniables et de faible durée de vie utile, car présentant des jeux indésirables par rapport à la structure d'appui.

Cette invention, grâce au dispositif de fixation pour piquets de ridelles, de camions, permet de trouver une solution au problème en proposant, à cet effet, un dispositif de fixation pour ridelles de camions, à partir d'une pièce d'appui, fixée à la plateforme du camion et comportant ce qu'il faut pour monter le piquet correspondant. Le dispositif se caractérise aussi par le fait que cette pièce d'appui présente axialement une mortaise, aux faces latérales convergentes à partir de son rebord supérieur, alors que le piquet présente pour sa part, en extrémité de ses faces latérales, deux chanfreins convergeant de manière conjuguée avec ceux de la pièce d'appui, dans laquelle il s'encastre progressivement.

La hauteur des chanfreins convergents du piquet, en particulier, est légèrement moindre que celles des bords convergents de la pièce d'appui, de sorte que se compensént les jeux susceptibles de se produire éventuellement à l'usage, en préservant dans tous les cas un bon ajustement.

On dispose désormais du levier sur lequel on agit, lequel joue aussi le rôle d'anse de sorte que l'utilisateur conserve à tout instant le contrôle sur son déplacement, quand bien même un ressort antogoniste jouerait en sens inverse. Jusqu'ici la manette rendait possible le blocage/déblocage. Mais il n'y avait guère la possibilité de contrôler son déplacement (tour) puisqu'elle ne comportait pas d'anse.

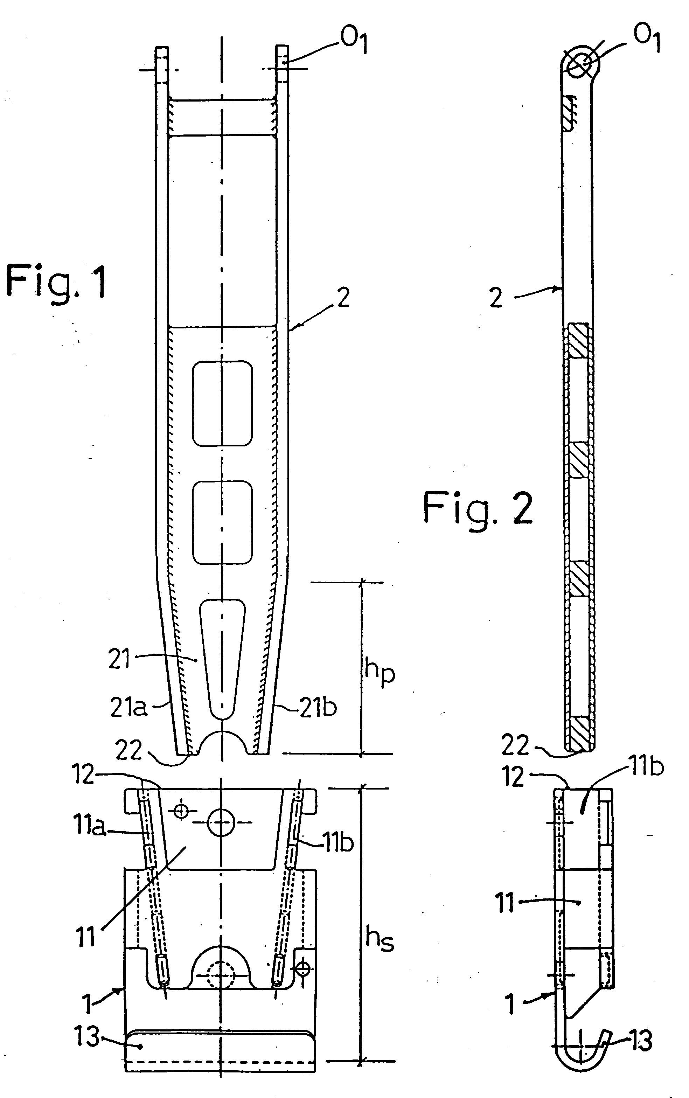

La figure 1 représente une vue générale en plan d'un dispositif de fixation pour piquets de ridelles de camions, suivant l'invention, avec le piquet (2) et la pièce-base (1) disposée pour le montage.

La figure 2 représente une vue de profil correspondant à la figure antérieure.

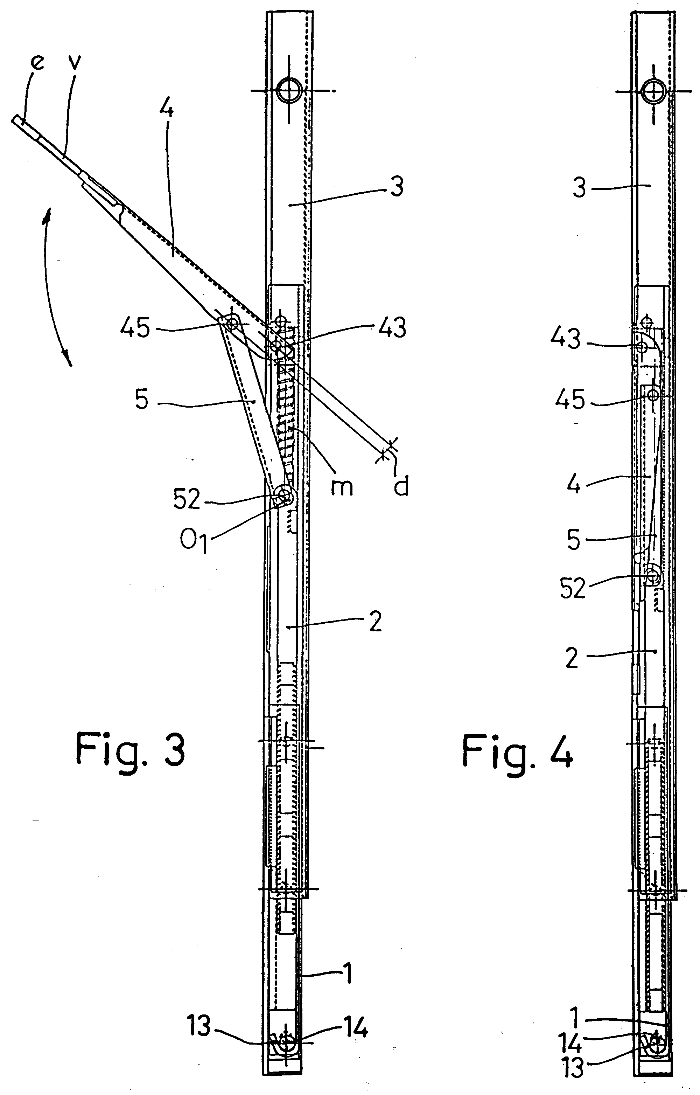

La figure 3 est une vue de côté du dispositif de la figure 1 incorporant l'ensemble du levier en position d'ouverture et le piquet (3).

La figure 4 est la figure 3 avec le levier en position de fermeture.

On n'ignore pas (l'invention n'y a nullement trait) que le piquet (3) s'encastre supérieurement et inférieurement avec le cadre de ridelle du camion. Il s'agit que le piquet (3) reste fixé à la ridelle du camion et pour cela on dispose d'une pièce de blocage (2) qui peut se déplacer en glissant sur le piquet (3).

La pièce support (1) présente un logement en crochet (13) pour retenir une clavette (14) ou élément similaire appartenant à l'ensemble du piquet (3).

La pièce-support (1) comporte l'encastrement (11) prévu pour loger par guidage la pièce de blocage (2) avec ses parois latérales (11a), (11b) orientées en convergeant à partir de son rebord supérieur (12).

La pièce de blocage (2) présente pour sa part à son extrémité de montage (21) les deux chanfreins (21a), (21b) convergeant vers son extrémité (22).

Le degré de convergence des chanfreins (21a), (21b) et des parois (11a), (11b) permet leur encastrement mutuel conjugué.

En outre, la hauteur totale (hs) des parois convergentes (11a), (11b) de la pièce support (1) est légèrement supérieure à la hauteur totale (hp) des chanfreins (21a), (21b) de la pièce de blocage (2); de sorte que les jeux pouvant se produire éventuellement à l'usage se trouvent ainsi compensés, en maintenant toujours un réglage parfait entre la pièce de blocage (2) et son support (1) associé à la plateforme du camion.

On dispose également d'un jeu de levier qui agit contre le ressort (m) relié par ses extrémités au piquet (3) et à la pièce de blocage (2).

Le jeu de levier comporte le levier d'intervention lui-même (4) relié au piquet (3) par l'articulation (43) et le bras intermédiaire (5) relié au levier (4) par l'articulation (45) et à la pièce de blocage (2) par l'articulation (52) dans son orifice en fente (0₁).

Les articulations (43), (45) du levier (4) restent hors course (d) afin de faciliter le travail de l'utilisateur lors du blocage-déblocage sur le levier (4) contre le ressort (m).

L'emboîtement/désemboîtement de la pièce de blocage (2) de la pièce-support (1) entraîne par conséquent la fixation/défixation du piquet (3) sur la pièce-support (1), c'est à dire sur la ridelle du camion.

Lorsqu'on intervient manuellement pour libérer le levier (4) et une fois surmonté la ligne d'équilibre (43), (45), (52) tend à s'ouvrir de manière très brusque. Pour l'éviter, on a équipé le levier (4) d'une anse (41) à prise manuelle, par exemple, en la dotant d'une fenêtre (v) par laquelle on peut passer les doigts, ainsi que d'une poignée (e).

## Revendications

**1.-** Dispositif de fixation pour piquet sur ridelles de camions, fait d'une pièce support, fixée à la plateforme du camion, d'une pièce de blocage glissant le long du piquet sous l'action d'un jeu de levier manuel et contre l'action d'un ressort relié par ses extrémités à la pièce de blocage et au piquet, se caractérisant par le fait que ladite pièce-support présente axialement une mortaise, aux parois latérales convergentes à partir de son bord supérieur tandis que la pièce de blocage présente, à l'extrémité de ses faces latérales, deux chanfreins convergentes ensemble avec ceux de la pièce-support, dans laquelle elle s'encastre progressivement.

**2.-** Dispositif de fixation pour piquets sur ridelles de camion, selon revendication antérieure, se caractérisant par le fait que la hauteur des chanfreins convergents de la pièce de blocage est légèrement inférieure à la hauteur des rebords convergents de la pièce support.

**3.-** Dispositif de fixation pour piquets sur ridelles de camions, selon la première revendication, ayant pour caractéristique que le levier comporte une anse de prise-contrôle manuel.

**4.-** Dispositif de fixation pour piquets sur ridelles de camions, selon la première revendication, ayant pour caractéristique que le jeu de levier comporte un bras intermédiaire relié à la pièce de blocage par une articulation dans un orifice en fente.

**5.-** Dispositif de fixation pour piquets sur ridelles de camions, selon la première revendication, ayant pour caractéristique que la pièce-support présente un logement en crochet de retenue de clavette du piquet.
